# EUROPEAN PATENT APPLICATION

(11) **EP 2 416 614 A1**
(43) Date of publication of application: **08.02.2012**
(21) Application number: 10758825.3
(22) Date of filing: 31.03.2010
(51) Int. Cl.: H04W 72/04, H04J 3/00, H04W 48/12

(54) **MOBILE COMMUNICATION METHOD AND RADIO BASE STATION**

(30) Priority: 31.03.2009 JP 2009086852
(71) Applicant: NTT DOCOMO, INC., Chiyoda-ku Tokyo 100-6150 (JP)
(72) Inventor: HOSONO, Hiroyuki, Tokyo 100-6150 (JP); HARADA, Naoaki, Tokyo 100-6150 (JP)
(74) Representative: HOFFMANN EITLE
(86) International application number: PCT/JP2010/055922
(87) International publication number: WO 2010/114054

(57) **Abstract**

A mobile communication method of the present invention includes a step of causing a radio base station 200 to allocate a communication timing selected from a plurality of communication timing candidates to a mobile station 300, and to notify a radio network controller of the communication timing, when the radio network controller 100 determines that it is possible to allocate the new communication timing to the mobile station 300, a step of causing the radio network controller to hold the communication timing notified by the radio base station and the radio network controller 100 to notify the mobile station 300 of the communication timing notified by the radio base station 200, and a step of causing the radio network controller 100 to notify the radio base station 200 of the communication timing held by the radio network controller 100 when the radio network controller 100 determines that it is impossible to allocate the new communication timing to the mobile station 300.

## Description

### TECHNICAL FIELD

The present invention relates to a mobile communication method and a radio base station.

### BACKGROUND ART

In a mobile communication system having a call reception control function, it is effective to reduce an interference amount in a radio link by performing such control that communications between mobile stations and a radio base station are not concentrated on a certain communication timing (for example, transmission slots and the like).

Moreover, in some cases, a radio base station is implemented in a way that hardware resource for performing baseband processing and the communication timing are associated with each other. From a view point of effective utilization of the hardware resource of the radio base station, it is effective to actively determine the communication timing.

For example, in a mobile communication system of W-CDMA /UMTS (Wideband Code Division Multiple Access/Universal Mobile Telecommunication System) scheme standardized by the 3GPP (3rd Generation Partnership Project), when EUL (Enhanced UpLink) Communication is started, a radio network controller RNC sends a radio base station BTS a signal called "HARQ (Hybrid Automatic Repeat reQuest) Process Allocation For 2-ms Scheduled/Non-Scheduled Transmission Grant", and thus can notify the radio base station BTS of the communication timing described above (specifically, an HARQ process used in communication between a mobile station and the radio base station) (see Non-patent Document 1).

Moreover, in such a mobile communication system, when the EUL communication is started, the radio network controller RNC sends a mobile station 300 a signal called "2ms scheduled/non-scheduled transmission grant HARQ process allocation" to notify the mobile station 300 of the communication timing described above (specifically, an HARQ process used in communication between the mobile station and the radio base station) (see Non-patent Document 2).

### PRIOR ART DOCUMENTS

### NON-PATENT DOCUMENTS

Non-patent Document 1: 3GPP TS25.433
Non-patent Document 2: 3GPP TS25.331

### SUMMARY OF SHE INVENTION

### PROBLEM TO BE SOLVED BY THE INVENTION

However, in the conventional mobile communication system, the mobile station 300 is configured to continue using the communication timing notified at the time of start of communication until the communication is terminated. Thus, from view points of interference amount reduction in a radio link and of effective utilization of the hardware resource of the radio base station, there is a problem that optimum operation has not been performed.

The present invention has been made in view of the above problem, and an objective of the present invention is to provide a mobile communication method and a radio base station which can achieve effective usage of hardware resource of the radio base station while reducing an interference amount in a radio link.

### MEANS FOR SOLVING THE PROBLEMS

The first feature of the present invention is summarized in that a mobile communication method including: step A of causing a radio network controller to determine whether or not a new communication timing is to be allocated to a mobile station on the basis of a type of a communication event signal transmitted by the mobile station; step B of causing a radio base station to allocate a communication timing selected from a plurality of communication timing candidates to the mobile station, and to notify the radio network controller of the communication timing, when the radio network controller determines that it is possible to allocate the new communication timing to the mobile station; step C of causing the radio network controller to hold the communication timing notified by the radio base station; step D of causing the radio network controller to notify the mobile station of the communication timing notified by the radio base station; step E of causing the radio network controller to notify a predetermined radio base station of the communication timing held by the radio network controller when the radio network controller determines that it is impossible to allocate the new communication timing to the mobile station; and a step F of causing the mobile station to perform communication at the notified communication timing.

The second feature of the present invention is summarized in that a radio base station including: a determination unit configured to determine whether or not a new communication timing is to be allocated to a mobile station on the basis of a type of a communication event signal transmitted by the mobile station; a selecting unit configured to allocate the communication timing selected from a plurality of communication timing candidates to the mobile station, when the determination unit determines that it is possible to allocate the new communication timing to the mobile station; a holding unit configured to hold the communication timing allocated by the selecting unit; and a notification unit configured to notify the mobile station of the communication timing allocated by the selecting unit, wherein when the determination unit determines that it is impossible to allocate the new communication timing to the mobile station, the notification unit notifies a predetermined radio base station of the communication timing held by the holding unit.

### EFFECTS OF THE INVENTION

As described above, the present invention can provide the mobile communication method and the radio base station which can achieve effective usage of hardware resource of the radio base station while reducing an interference amount in a radio link.

### BRIEF DESCRIPTION OF THE DRAWINGS

[Fig. 1] Fig. 1 is an overall configuration diagram of a mobile communication system of a first embodiment of the present invention.
[Fig. 2] Fig. 2 is a functional block diagram of a radio network controller of the first embodiment of the present invention.
[Fig. 3] Fig. 3 is a view showing an example of contents managed by a holding unit of the radio network controller of the first embodiment of the present invention.
[Fig. 4] Fig. 4 is a functional block diagram of a radio base station of the first embodiment of the present invention.
[Fig. 5] Fig. 5 is a view showing an example of contents managed by a communication timing management unit of the radio base station of the first embodiment of the present invention.
[Fig. 6] Fig. 6 is a sequence diagram showing an operation of the mobile communication system of the first embodiment of the present invention

### MODEMS FOR CARRYING OUT THE INVENTION

### (Configuration of Mobile Communication System of First Embodiment of the Present Invention)

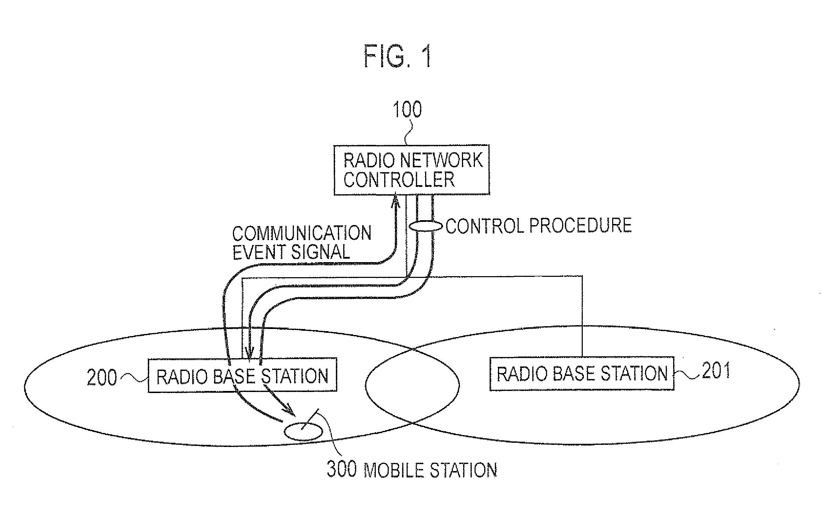

A configuration of a mobile communication system of the first embodiment of the present invention will be described with reference to Figs. 1 through 5.

As shown in Fig. 1, the mobile communication system of the embodiment includes a radio network controller 100 and radio base stations 200, 201. Note that, the radio base stations 200, 201 are accommodated in the radio network controller 100.

The radio network controller 100 is configured to allocate communication parameters to the radio base stations 200, 201, manage the communication parameters, and the like, the communication parameters used in radio communication performed between a mobile station 300 and each of the radio base stations 200, 201.

Moreover, the mobile communication system of the embodiment may be a W-CDMA mobile communication system as shown in Fig. 1 or an LTE (Long Term Evolution) mobile communicate system.

Note that, if the mobile communication system of the embodiment is the LTE (Long Term Evolution) mobile communication system, a function of the radio network controller 100 described latter are configured to be implemented in each of the radio base stations 200, 201.

The mobile station 300 is configured to transmit a communication event signal to the radio network controller 100 via the radio base station 200 managing a cell in which the mobile station 300 exists or a cell in which the mobile station 300 is performing communication, at the time of communication start, handover, a transmission rate increase request, a different-frequency-channel switch request, or the like.

Here, a communication start request signal, a channel switch request signal, an inter-cell handover request signal, the transmission speed increase request signal, and the like are conceivable as the communication event signals.

The mobile communication system of the embodiment is configured such that control procedures corresponding to the communication event signals described above are performed among the radio network controller 100, the radio base station 200, and the mobile station 300 in response to the communication event signals described above.

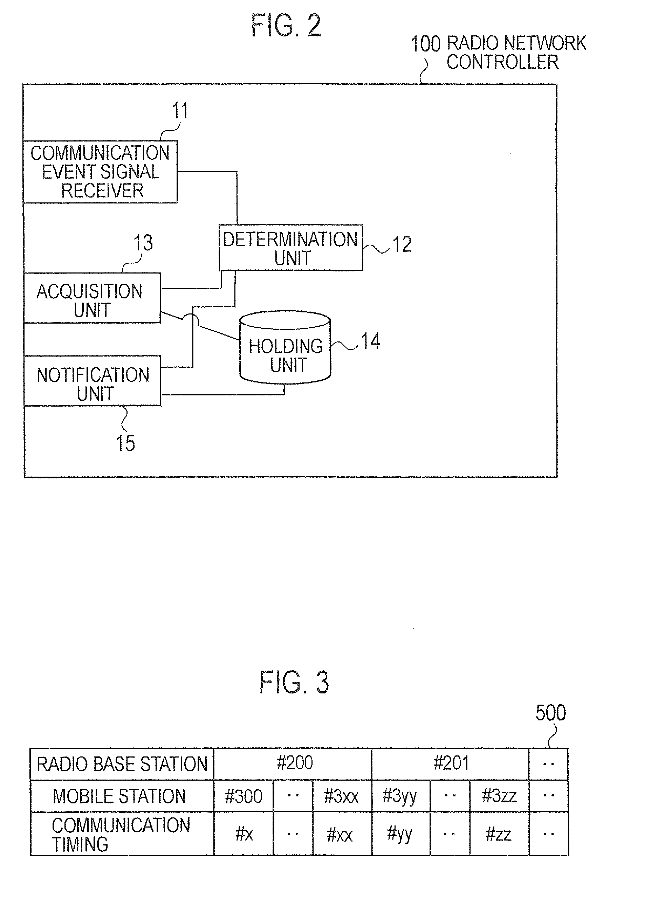

As shown in Fig. 2, the radio network controller 100 includes a communication event signal receiver 11, a determination unit 12, an acquisition unit 13, a holding unit 14, and a notification unit 15.

The communication event signal receiver 11 is configured to receive the communication event signals transmitted by the mobile station 300.

The determination unit 12 is configured to determine whether or not a new communication timing is to be allocated to the mobile station 300, on the basis of the type of the communication event signal received by the communication event signal receiver 11. For example, such communication timing may be the timing determined with an HARQ process.

Here, the determination unit 12 may be configured to identify the type of the communication event signal on the basis of a format of the communication event signal received by the communication event signal receiver 11.

For example, the determination unit 12 is configured to determine that the new communication timing can be allocated to the mobile station 300 when the type of the communication event signal received by the communication event signal receiver 11 is the communication start request signal, the channel switch request signal, or the like.

Meanwhile, the determination unit 12 is configured to determine that the new communication timing cannot be allocated to the mobile station 300 when the type of the communication event signal received by the communication event signal receiver 11 is the inter-cell handover request signal or the like.

The acquisition unit 13 is configured to acquire the communication timing newly allocated to the mobile station 300 by the radio base station 200 from the radio base station 200 by using a communication timing response signal, when the determination unit 12 determines that the new communication timing can be allocated to the mobile station 300.

The holding unit 14 is configured to hold the communication timing acquired by the acquisition unit 13, i.e. the communication timing notified by the radio base station) 200.

Here, the holding unit 14 may be configured to overwrite the communication timing which the holding unit 14 is holding at that point with the communication timing acquired by the acquisition unit 13, i.e. the communication timing notified by the radio base station 200.

Specifically, the holding unit 14 is configured to hold the communication timing being allocated to each mobile station, for each of the base stations as shown in Fig. 3.

The notification unit 15 is configured to notify the mobile station 300 of the communication timing acquired by the acquisition unit 13, i.e. the communication timing notified by the radio base station 200.

Here, the notification unit 15 is configured to notify the predetermined radio base station 200 (for example, a radio base station managing a handover destination cell of the mobile station 300) of the communication timing held by the holding unit 14 at that time, when the determination unit 12 determines that the new communication timing cannot be allocated to the mobile station 300.

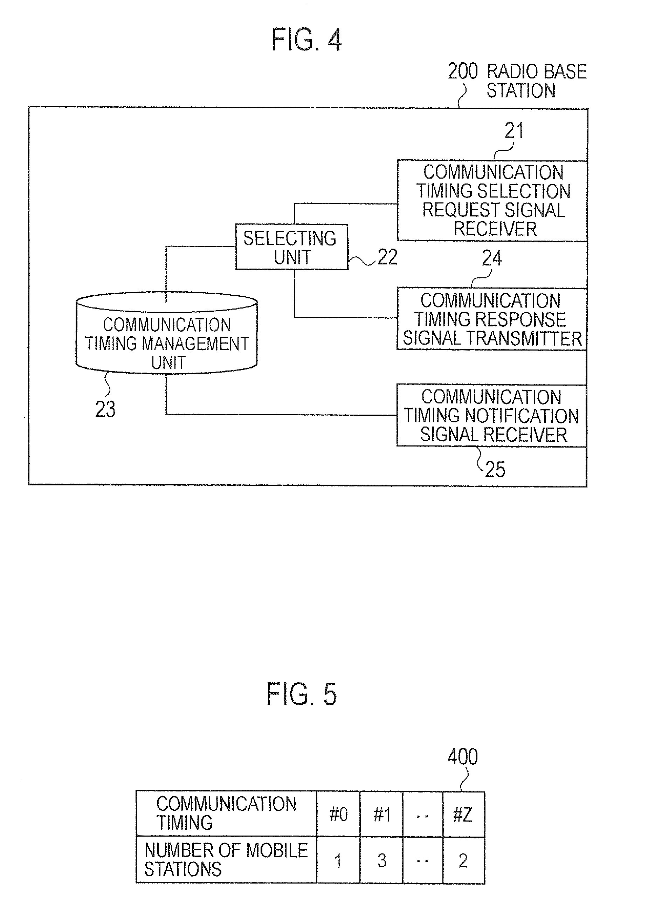

As shown in Fig. 4, the radio base station 200 includes a communication timing selection request signal receiver 21, a selecting unit 22, a communication timing management unit 23, a communication timing response signal transmitter 24, and a communication timing notification signal receiver 25.

The communication timing selection request signal receiver 21 is configured to receive a communication timing selection request signal transmitted by the radio network controller 100.

The selecting unit 22 is configured to allocate the communication timing selected from multiple communication timing candidates to the mobile station 300 in response to the communication timing selection request signal received by the communication timing selection request signal receiver 21.

As shown in Fig. 5, the communication timing management unit 23 is configured to manage the number of mobile stations to which each communication timing is allocated.

Here, the communication timing management unit 23 is configured to update contents managed thereby when the selecting unit 22 allocates the new communication timing to the mobile station 300.

The communication timing response signal transmitter 24 is configured to notify the radio network controller 100 of the new communication timing allocated to the mobile station 300 by the selecting unit 22.

The communication timing notification signal receiver 25 is configured to receive a communication timing notification signal transmitted by the radio network controller 100, and perform handover processing for the mobile station 300 by using the communication timing included in the communication timing notification signal.

### (Operation of Mobile Communication System of First Embodiment of the Present Invention)

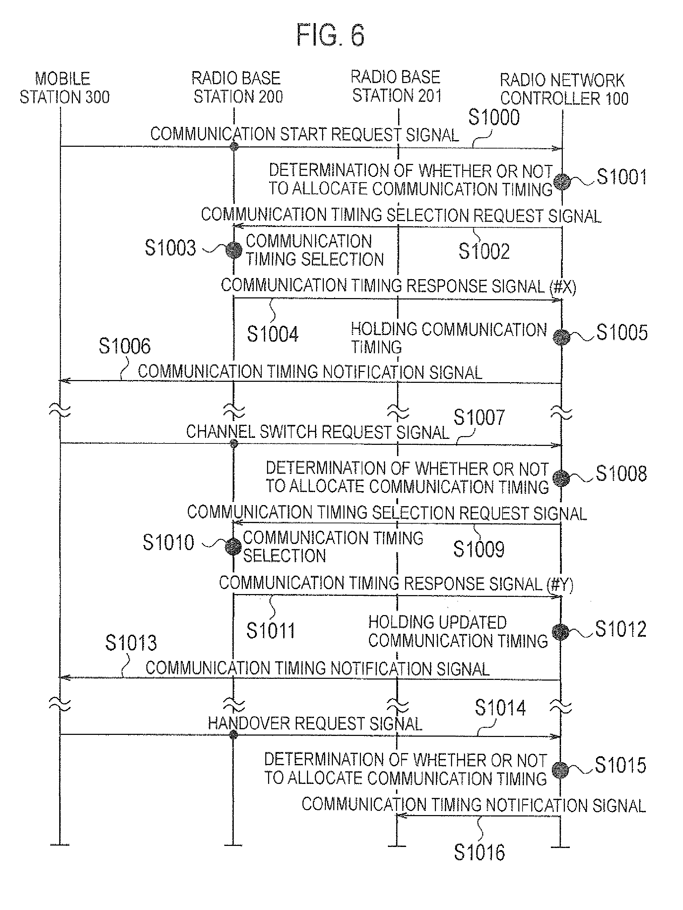

An operation of the mobile communication system of the first embodiment of the present invention will be described with reference to Fig. 6.

As shown in Fig. 6, in Step S1000, the mobile station 300 transmits the communication start request signal to the radio network controller 100 via the radio base station 200 at the time of communication start.

In Step S1001, the radio network controller 100 determines whether or not the new communication timing can be allocated to the mobile station 300, the determination triggered by reception of the communication start request signal.

Here, the radio network controller 100 determines that the new communication timing can be allocated to the mobile station 300. Then, in Step S1002, the radio network controller 100 sends the radio base station 200 the communication timing selection request signal requesting selection of the communication timing to be used in communication between the mobile station 300 and the radio base station 200.

In Step S1003, the radio base station 200 counts the number of mobile stations to which each of predetermined communication timings #0 to #9 is allocated, and selects a communication timing #X being allocated to the smallest number of mobile stations, as the communication timing to be allocated to the mobile station 300.

In Step S1004, the radio base station 200 sends the radio network controller 100 the communication timing response signal for notifying the radio network controller 100 of the selected communication timing #X.

In Step S1005, the radio network controller 100 holds the. Communication timing #X notified by the radio base station 200 as a communication timing to be used in the communication between the Mobile station 300 and the radio base station 200.

In Step S1006, the radio network controller 100 notifies the mobile station 300 of the communication timing #X notified by the radio base station 200, and thus achieves the radio communication between the radio base station 200 and the mobile station 300 by causing the communication timing to be used to match between the radio base station 200 and the mobile station 300.

Thereafter, in Step S1007, the mobile station 300 transmits the channel switch request signal to the radio network controller 100 via the radio base station 200 at the time of switching to a different frequency channel.

In Step S1008, the radio network controller 100 determines whether or not the new communication timing can be allocated to the mobile station 300, the determination triggered by reception of the channel switch request signal.

Here, the radio network controller 100 determines that the new communication, timing can be allocated to the mobile station 300. Then, in Step S1009, the radio network controller 100 sends the radio base station 200 the communication timing selection request signal requesting selection of the communication timing to be used in the communication between the mobile station 300 and the radio base station 200.

In Step S1010, for example, the radio base station 200 counts the number of mobile stations to which each of the predetermined communication timings #0 to #9 is currently allocated, and selects a communication timing #Y being allocated to the smallest number of mobile stations as the communication timing to be allocated to the mobile station 300.

In Step S1011, the radio base station 200 sends the radio network controller 100 the communication timing response signal for notifying the radio controller 100 of the selected Communication timing #Y.

In Step S1012, the radio network controller 100 updates the communication timing used between the mobile station 300 and the radio base station 200 from the communication timing #X currently held at that time to the communication timing #Y on the basis of the communication timing #Y notified by the radio base station 200, and holds the communication timing #Y.

In Step S1013, the radio network controller 100 notifies the mobile station 300 of the communication timing #Y notified by the radio base station 200, and thus achieves the radio communication between the radio base station 200 and the mobile station 300 by causing the communication timing to be used to match between the radio base station 200 and the mobile station 300.

Then, in Step S1014, the mobile station 300 transmits the handover request signal to the radio network controller 100 via the radio base station 200 at the time of inter-cell handover.

In Step S1015, the radio network controller 100 determines whether or not the new communication timing can be allocated to the mobile station 300, the determination triggered by reception of the handover request signal.

Here, the radio network controller 100 determines that the new communication timing cannot be allocated to the mobile station 300. Then, in Step S1016, the radio network controller 100 sends the radio base station (predetermined radio base station) 201 the communication timing notification signal for causing the radio base station 201 to notify the radio base station 200 of the communication timing #Y held by the holding unit 14 at that time. Thus, the communication timing is synchronized between the mobile station 300 and the radio base station 201, and radio communication between the radio base station 201 and the mobile station 300 is achieved.

### (Action and Effect of Mobile Communication System of First Embodiment of the Present Invention)

According to the mobile station 300 used in the mobile communication system of the first embodiment of the present invention, the communication timings between the mobile station 300 and the radio base stations 200, 201 are allocated to be distributed while determinations are made on the communication events capable of notifying the mobile station 300 of the communication timing. Thus, interference amount in a radio link can be reduced, and also hardware resource for performing baseband processing in the radio base stations can be effectively utilized.

The aspects of the embodiment described above can be expressed as described below.

A first aspect of the embodiment is a mobile communication method including: step A (Steps S1001, S1008, S1015) of causing the radio network controller 100 to determine whether or not the new communication timing is to be allocated to the mobile station 300 on the basis of the type of the communication event signal transmitted by the mobile station 300; step B (Steps S1003, S1004, S1010, S1011) of causing the radio base station 200 to allocate the communication timing selected from the multiple communication timing candidates to the mobile station 300, and to notify the radio network controller 100 of the communication timing when the radio network controller 100 determines that it is possible to allocate the new communication timing to the mobile station 300; step C (Steps S1005, S1012) of causing the radio network controller 100 to hold the communication timing notified by the radio base station 200; step D (Steps S1006, S1013) of causing the radio network controller 100 to notify the mobile station 300 of the communication timing notified by the radio base station 200; step E (Step S1016) of causing the radio network controller 100 to notify the radio base station 200 of the communication timing held by the radio network controller 100 when the radio network controller 100 determines that it is impossible to allocate the new communication timing to the mobile station 300; and step F of causing the mobile station 300 to perform communication at the notified communication timing.

In the first aspect of the embodiment, in step C, the radio network controller 100 may overwrite the communication timing held by the radio network controller 100 at that time with the communication timing notified by the radio base station 200.

In the first aspect of the embodiment, the function of the radio network controller 100 may be implemented in each of the radio base stations 200, 201.

In the first aspect of the embodiment, the communication timing may be the timing determined with an HARQ process.

A second aspect of the embodiment is a radio base station including: the determination unit 12 configured to determine whether or not the new communication timing is to be allocate to the mobile station 300 on the basis of the type of the communication event signal transmitted by the mobile station 300; the selecting unit 22 configured to allocate the communication timing selected from the multiple communication timing candidates to the mobile station 300, when the determination unit 12 determines that it is possible to allocate the new communication timing to the mobile station 300; the holding unit 14 configured to hold the communication timing allocated by the selecting unit 22; and the notification unit 15 configured to notify the mobile station 300 of the communication timing allocated by the selecting unit 23. When the determination unit 12 determines that it is impossible to allocate the new communication timing to the mobile station 300, the notification unit 15 notifies the mobile station 300 of the communication timing held by the holding unit 14.

In the second aspect of the embodiment, the communication timing may be the timing determined with an HARQ process.

Note that operations of the above-described mobile station 300, radio base stations 200, 201, and radio network controller 100 may be implemented by hardware or may be implemented by a software module to be executed by a processor, or may be implemented in combination of the both.

The software module may be provided in any type of storage medium such as a RAM (Random Access Memory), a flash memory, a ROM (Read Only Memory), an EPROM (Erasable Programmable ROM), an EEPROM (Electronically Erasable and Programmable ROM), a register, a hard disk drive, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the Mobile station 300, the radio base stations 200, 201, or the radio network controller 100. Also, the storage medium and the processor may be provided in the mobile station 300, the radio base stations 200, 201, or the radio network controller 100 as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

## Claims

1. A mobile communication method comprising:
step A of causing a radio network controller to determine whether or not a new communication timing is to be allocated to a mobile station on the basis of a type of a communication event signal transmitted by the mobile station;
step B of causing a radio base station to allocate a communication timing selected from a plurality of communication timing candidates to the mobile station, and to notify the radio network controller of the communication timing, when the radio network controller determines that it is possible to allocate the new communication timing to the mobile station;
step C of causing the radio network controller to hold the communication timing notified by the radio base station;
step D of causing the radio network controller to notify the mobile station of the communication timing notified by the radio base station;
step E of causing the radio network controller to notify a predetermined radio base station of the communication timing held by the radio network controller when the radio network controller determines that it is impossible to allocate the new communication timing to the mobile station; and
step F of causing the mobile station to perform communication at the notified communication timing.

2. The mobile communication method according to claim 1, wherein, in the step C, the radio network controller overwrites the communication timing held by the radio network controller at that time with the communication timing notified by the radio base station.

3. The mobile communication method according to claim 1 or 2, wherein a function of the radio network controller is implemented in the radio base station.

4. The mobile communication method according to any one of claims 1 to 3, wherein the communication timing may be the timing determined with an HARQ process.

5. A radio base station comprising:
a determination unit configured to determine whether or not a new communication timing is to be allocated to a mobile station on the basis of a type of a communication event signal transmitted by the mobile station;
a selecting unit configured to allocate the communication timing selected from a plurality of communication timing candidates to the mobile station, when the determination unit determines that it is possible to allocate the new communication timing to the mobile station;
a holding unit configured to hold the communication timing allocated by the selecting unit; and
a notification unit configured to notify the mobile station of the communication timing allocated by the selecting unit, wherein
when the determination unit determines that it is impossible to allocate the new Communication timing to the mobile station, the notification unlit notifies a predetermined radio base station of the communication timing held by the holding unit.

6. The radio base station according to claim 5, wherein the communication timing may be the timing determined with an HARQ process.
